Europäisches Patentamt

European Patent Office

Office européen des brevets

(11) Publication number: **0 221 736**
**A2**

# (12) EUROPEAN PATENT APPLICATION

(21) Application number: **86308280.6**

(22) Date of filing: **24.10.86**

(51) Int. Cl.⁴: **G 01 G 5/04**

(30) Priority: **30.10.85 AU 3176/85**

(43) Date of publication of application:
**13.05.87 Bulletin 87/20**

(84) Designated Contracting States:
**AT BE CH DE ES FR GB GR IT LI LU NL SE**

(71) Applicant: **APPLIANCE CONTROL SYSTEMS**
**(HOLDINGS) PTY. LTD.**
**1/80-84 Milperra Road**
**Revesby N.S.W. 2212 (AU)**

(72) Inventor: **Larsen, Laurie E.**
**49 Gilham Street**
**Castle Hill N.S.W. 2154 (AU)**

(74) Representative: **Newell, William Joseph et al**
**D. Young & Co., 10 Staple Inn**
**London WC1V 7RD (GB)**

(54) **Improvements in weighing apparatus.**

(57) Apparatus for weighing an object comprising a weighing platform (10) which contains a flowable substance. The platform receives the object such that the flowable substance is subjected to pressure which is related to the weight of the object. The apparatus includes sensing means (11) coupled to the flowable substance and is adapted to provide a signal indicative of the pressure to which the flowable substance is subjected. A microprocessor (12) receives the signal and provides an output related to the weight of the object. A display is provided for displaying that output. The apparatus is operable in a variety of modes; for example in one mode it may be used for weighing babies.

**Description**

## IMPROVEMENTS IN WEIGHING APPARATUS

The present invention relates to weight measurement. In particular. the present invention concerns apparatus for determining the weight or force exerted by an object.

Conventional weighing apparatus use either linear distortion of a material under stress (eg a spring scale in which distortion of the spring is proportional to force applied) or distortion of a lump of material measured with a strain gauge as in the case of a 'load cell'. A disadvantage of these methods is that fatigue of the spring or of the 'load cell' leads to inaccuracies which increase - with time. Thermal expansion of materials further reduces accuracy which cannot be predicted unless a temperature sensing device is used. In very sensitive and accurate apparatus, changes in the earths magnetic field and/or atmospheric pressure are additional sources of error.

It is an object of the present invention to alleviate the abovementioned disadvantages of prior art weighing apparatus. A further object is to provide weighing apparatus which may significantly reduce errors due to fatigue, changes in atmospheric pressure, earth's magnetic field and temperature.

According to the present invention there is provided apparatus for measuring weight of an object comprising:

a weighing platform containing a flowable substance and adapted to receive said object such that said substance is subject to a pressure related to the weight of said object;

sensing means coupled to said substance and adapted to provide a signal indicative of said pressure;

processing means for receiving said signal and adapted to provide an output related to the weight of said object; and

display means for displaying said output.

The weighing platform preferably contains a substance which is substantially non-compressible. The substance preferably also is isotropic. The substance may be subject to pressure which varies according to the force or weight applied to the substance. The substance may be contained in a non-extensible container. The container may be flexible. The container may comprise plastics or other material. In one form, the container may comprise a substantially thin (bath mat thickness) bag. The bag may be substantially rectangular. The bag or container may be filled with a substance such as a fluid. The fluid may comprise water.

An object to be weighed or force to be measured may be applied to the substance in any convenient manner. The bag or container may include a substantially rigid surface portion. The rigid surface portion may be formed integrally with the bag or container or it may be formed separately and affixed thereto. The substantially rigid portion may comprise a weighing plate of known surface area. The plate preferably is substantially rectangular but may be round or any other convenient shape. The weighing plate preferably is of sufficient size and shape to receive the whole of the object to be weighed thereon.

The pressure exerted on the flowable substance may be determined by reference to the weight or force exerted by the object and the area of the substantially rigid surface portion. The output pressure P is given by the following equation:

(1) $P = \dfrac{mg}{A} + \text{constant}$

where m is the weight of the object, g is acceleration due to gravity and A is the surface area of the substantially rigid surface portion or weighing plate. It may be seen from equation (1) that specific pressure may be obtained for any weight or force simply by altering the area of the weighing plate.

The pressure sensing means preferably comprises a pressure transducer or other pressure sensitive device. The pressure sensing means may be coupled to the flowable substance in any convenient manner. The pressure transducer may comprise a device whose output resistance varies according to the pressure applied to its sensing element. In one form, the sensing means may comprise a strain gauge. The strain gauge may comprise a semi-conductor device utilizing the piezoresistive effect. Alternatively, the pressure transducer may comprise a device whose output capacitance changes as pressure is applied.

The processing means may be provided in any suitable manner. Preferably, the processing means includes a suitably programmed microprocessor or microcomputer. The processing means may be adapted to calculate the weight or force exerted by an object.

The processing means may include means for zeroing the apparatus before making a reading. Zeroing may be performed during an initial scan by the processing means.

The signal from the pressure sensing means may be input directly to the processing means or it may be transmitted via infra red, radio, extension leads or other transmission means.

The processing means may include storage means for storing one or more previous weight readings. The storage means may comprise a digital memory. In one form, the storage means may comprise a random access memory. The storage means preferably is non-volatile.

The processing means may be programmed to operate in one or several modes. Modes of operation may be selectable via a keyboard interfaced with said processing means.

There now follows a discussion of the various modes which may be implemented in an embodiment of this invention.

Standard Mode

By utilizing the relationship of equation (1) the processing means may be adapted to calculate the weight (m) of an object placed on the weighing platform. The weight may be displayed in kilograms or pounds. The weight may be displayed as soon as a load is placed on the weighing platform. In one form the processing means may be adapted to display weight for 20 seconds after the object is removed from the weighing platform. The processing means may then revert to an idle mode.

Idle Mode

The idle mode may be entered by the processing means upon power up i.e. upon connection to a power source. The power source may comprise alkaline or rechargable batteries. When idle mode is entered the display means may be adapted to display a figure "8" in all positions for a few seconds. The display may then be blanked until a (non-numeric) key on the keyboard is depressed or a load is placed on the weighing platform. If a numeric key is pressed the processing means may be adapted to display a figure "8" in all positions. This may be used as a test function. Because the idle mode is a no load condition it may be used to perform automatic zeroing taking into consideration variations in earth's magnetic field, atmospheric pressure, gravity and temperature.

Additive Mode

An additive mode may be selectable via the keyboard. An appropriate sign may be displayed on the display means. A first weight may be placed on the weighing platform and displayed (in kg or lbs) as selected. The first weight may then be removed from the platform to initiate additive mode. The first weight may be retained in memory and display may remain unaltered.

A second weight may then be placed on the weighing platform. (The processing means may be arranged to go into idle mode if this is not done within say 20 seconds). The display means may now show the sum of the first and second weights. The processing means may be arranged to return to idle mode if after key depression no load is put on the weighing platform within say 20 seconds. The additive mode may be used for weighing luggage etc.

Comparative Mode

A comparative mode may be selectable via the keyboard. The comparative mode preferably is selectable by pressing a non-numerical key together with a numerical key eg. a number from 0 to 9 i.e. a personal code. The number may be used to access a memory used to store a weight result obtained sometime in the past.

A weight may then be put on the weighing platform. (The processing means may be arranged to go into idle mode if this is not done within 20 seconds). The weight may be displayed (kg or lbs) in the following manner. If the (new) weight is less or equal to the (old) weight stored in memory the processing means may be adapted to show the new weight for a period of 5 seconds and then the old weight for 5 seconds. This may be repeated as long as the new weight remains on the weighing platform. If the new weight is more than the old weight stored in memory the processing means may be adapted to show the new weight for say 0.5 seconds and then blank the display for 0.5 seconds. This may be repeated for about 5 seconds. The old weight may then be displayed continuously for 5 seconds. This sequence may be repeated as long as the (new) weight remains on the weighing platform.

Accumulative Mode

This mode may be selectable to provide in effect a substractive weighing function. The mode may be used when say a baby is to be weighed. The mother may step onto the weighing platform and her weight may be displayed. After say 5 seconds the display may be zeroed with the mother still on the platform. The baby may then be handed to the mother and only the baby's weight is then displayed.

The accumulative mode, may include a memory for storing the baby's weight for future reference. The baby's old weight may be recalled for display.

In one form the new weight may be displayed alternately with the old weight eg. 5 seconds each for say 20 seconds. Preferably the new weight is shown in a flashing mode and the old weight in a steady state mode. The new weight may be then be stored in memory, replacing the old weight. The processing means may then revert to the idle mode.

The apparatus may include temperature sensing means for sensing ambient temperature and/or temperature of the substance in the weighing platform. The temperature sensing means may be adapted to compensate for variations in pressure due to ambient temperature changes. The temperature sensing means may be connected to the processing means via a suitable interface. The temperature sensing means may be provided in any suitable manner eg. thermister, thermocouple, semiconductor junction, etc.

The display means may be adapted to display the weight or force exerted by the object being weighed. The display means may be provided in any suitable manner. In one form the display means may comprise a digital display such as liquid crystal or LED. The apparatus may be adapted to display the weight or force in any convenient units, for example, kilograms, pounds, etc. The apparatus may include means for converting the weight or force from one unit to another.

The display means may be physically located on the apparatus or it may be remote therefrom. For example, if the weighing apparatus of the present invention is applied to a weighing scale, the display means may in one form be located substantially at eye level to enable easy reading of the scale.

The apparatus of the present invention may be applied to a wide variety of loads. Due to its construction the present apparatus may be produced with a relatively low profile not readily achievable with conventional apparatus. Manufacturing costs also may be reduced because bulky mechanical devices and load calls may be eliminated. Apparatus according to the present invention also may be less susceptible to damage due to rough handling when compared to existing designs. Application of intelligent electronics may eliminate zeroing of the apparatus. Long term calibration stability of the apparatus may be exceptional.

By way of example only, an embodiment of the present invention will now be described with reference to the accompanying drawings wherein:

Figure 1 shows a block diagram of a weighing apparatus according to the present invention;

Figure 2 shows a block diagram of one preferred form of weighing apparatus according to the present invention.

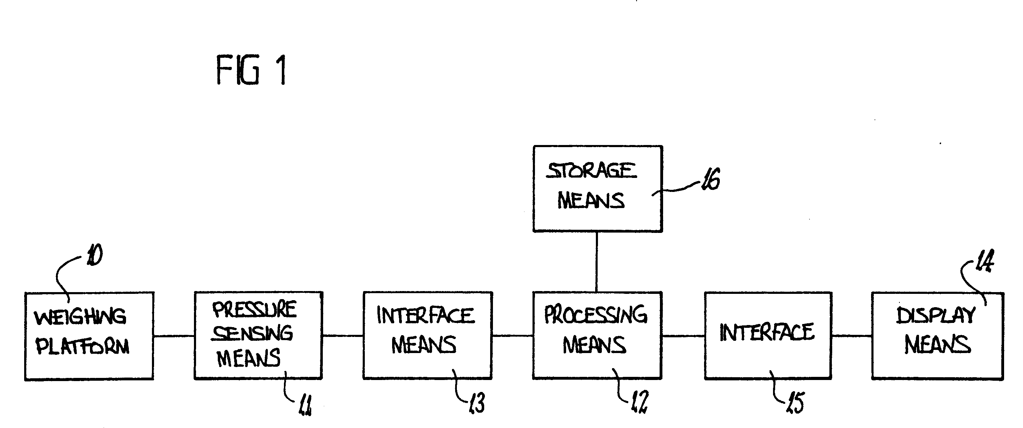

The weighing apparatus of Figure 1 comprises a weighing platform 10 operatively connectable to pressure sensing means 11. The output of pressure sensing means 11 is applied to processing means 12 via suitable interface means 13. The output of processing means 12 is provided to display means 14 via suitable interface means 15. Storage means 16 is connectable to processing means 12 for storing data.

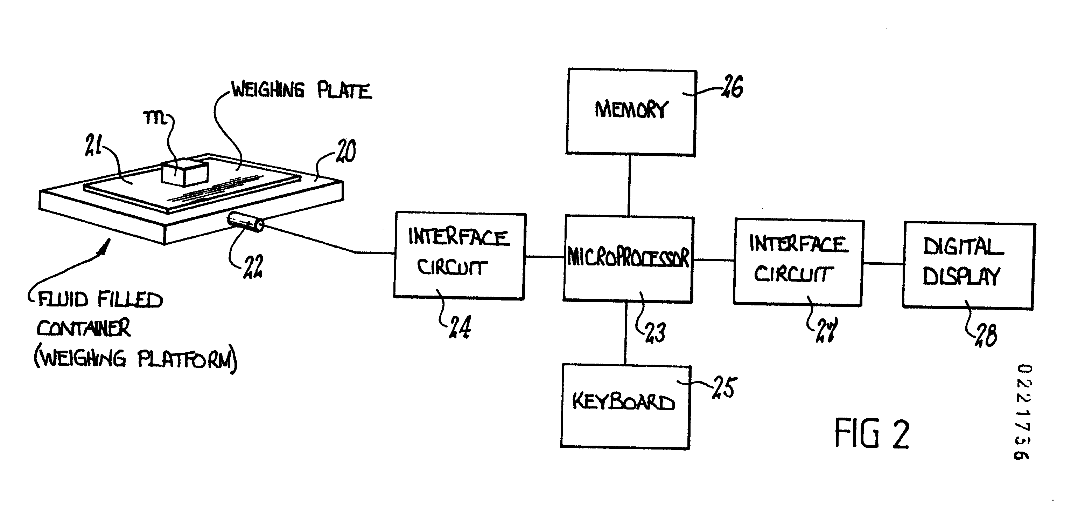

The preferred embodiment of the apparatus shown in Figure 2 includes a weighing platform comprising a fluid filled container 20 and a substantially rigid weighing plate 21. The weighing plate 21 is rectangular with area A.

A pressure transducer 22 is attached to the fluid filled container 20 such that the sensing element of the transducer is in communication with the substance (fluid) in the container 20.

The output of pressure transducer 22 is connected to microprocessor 23 via interface circuit 24. Interface circuit 24 includes an operational amplifier and a wheatstone bridge in which the transducer 22 forms one arm of the bridge. The interface circuit 24 includes an analogue to digital converter. The output of the operational amplifier is connected to the analogue to digital converter. The analogue to digital converter alternatively may be implemented in microprocessor 23.

Microprocessor 23 calculates the weight or force exerted by an object m on weighing plate (area A) 21 by utilizing the relationship of equation (1). Microprocessor 23 additionally may be adapted to linearise any non-linearity present in weighing platform 20 or in pressure sensing means 22.

A keyboard 25 having numeric and non-numeric keys is connectable to microprocessor 23 for controlling the measuring apparatus eg. mode selection, switch on/switch off etc.

Memory 26 is connectable to microprocessor 23 for storing one or more weight or force readings for subsequent recall. The output of microprocessor 23 is connectable to a digital display 28 via a suitable interface circuit 27. Digital display 28 may comprise liquid crystal or LED segment displays. Interface circuit 27 includes suitable driver/decoder circuits.

the electronics of the present apparatus may be provided in substantially integrated form to minimise unit costs.

It will be appreciated that various alterations modifications and/or additions may be introduced into the constructions and arrangements of parts previously described without departing from the spirit or ambit of the present invention.

## Claims

1. Apparatus for measuring weight of an object comprising:
a weighing platform (10) containing a flowable substance adapted to receive said object such that said substance is subject to a pressure related to the weight of said object;
sensing means (11) coupled to said substance and adapted to provide a signal indicative of said pressure;
processing means (12) for receiving said signal and adapted to provide an output related to the weight of said object; and
display means (14) for displaying said output.

2. Apparatus according to claim 1 wherein said weighing platform (10) comprises a fluid filled container (20).

3. Apparatus according to claim 1 or 2 wherein said sensing means (11) comprises a pressure transducer.

4. Apparatus according to claim 1, 2 or 3 wherein said processing means (12) comprises a microprocessor (23).

5. Apparatus according to any one of the preceding claims wherein said display means (14) comprises one or more digital display elements (28).

6. Apparatus according to any one of the preceding claims further comprising a keyboard (25) connectable to said processing means (12) for controlling operation of said apparatus.

7. Apparatus according to claim 6 wherein said keyboard is adapted for selecting one or more modes of operation selectable from: standard mode; idle mode; additive mode; comparative mode; accumulative mode; substantially as herein described.

## FIG 1

STORAGE MEANS — 16

WEIGHING PLATFORM — 10

PRESSURE SENSING MEANS — 11

INTERFACE MEANS — 13

PROCESSING MEANS — 12

INTERFACE — 15

DISPLAY MEANS — 14

WEIGHING PLATE

$m$

21

20

MEMORY — 26

FLUID FILLED
CONTAINER
(WEIGHING PLATFORM)

22

INTERFACE
CIRCUIT — 24

MICROPROCESSOR — 23

INTERFACE
CIRCUIT — 27

DIGITAL
DISPLAY — 28

KEYBOARD — 25

FIG 2